# EUROPÄISCHE PATENTSCHRIFT

(11) **EP 2 491 235 B1**
(45) Veröffentlichungstag und Bekanntmachung des Hinweises auf die Patenterteilung: **23.12.2015**
(21) Anmeldenummer: 10768726.1
(22) Anmeldetag: 13.10.2010
(51) Int. Cl.: F02B 67/06, F16H 7/08, F16H 7/12

(54) **VERFAHREN UND VORRICHTUNG ZUM BETREIBEN EINES RIEMENTRIEBS EINES KRAFTFAHRZEUGS**
METHOD AND DEVICE FOR OPERATING A BELTDRIVE OF A VEHICLE
PROCÉDÉ ET DISPOSITIF PERMETTANT DE FAIRE FONCTIONNER UN ENTRAINEMENT PAR COURROIE D'UN VEHICULE

(30) Priorität: 21.10.2009 DE 102009045880
(43) Veröffentlichungstag der Anmeldung: 29.08.2012
(73) Patentinhaber: Robert Bosch GmbH, 70442 Stuttgart (DE)
(72) Erfinder: JAROS, Rolf, 71522 Backnang (DE); DETROIS, Yves, 71229 Leonberg (DE)
(86) Internationale Anmeldenummer: PCT/EP2010/065308
(87) Internationale Veröffentlichungsnummer: WO 2011/047992

(56) Entgegenhaltungen:
- WO-A1-03/027537
- WO-A2-03/036133
- DE-A1- 10 153 329

## Beschreibung

Die Erfindung betrifft ein Verfahren und eine Vorrichtung zum Betreiben eines Riementriebs eines Kraftfahrzeugs.

### Stand der Technik

Kraftfahrzeuge, die einen riemengetriebenen Antrieb aufweisen, sind bekannt. Beispielsweise wird in der DE 10153 329 A1 eine Riemenübertragungsvorrichtung beschrieben, die eine Rolle einer rotierenden elektrischen Maschine zum Übertragen einer Anlasserkraft auf einen Motor, eine Motorrolle zum Übertragen der Anlasserkraft auf den Motor und auch zum Übertragen einer Rotationskraft des Motors auf ein Zubehörteil und eine Hilfsrolle, die durch die Kraft von der Motorrolle zum Rotieren angetrieben ist, um dabei das Zubehörteil anzutreiben, aufweist. Weiterhin enthält die bekannte Vorrichtung einen Riemen, der um die Rolle der rotierenden elektrischen Maschine, die Motorrolle und die Hilfsrolle gewunden ist, und einen Riemenspannungseinsteller zum Spannen des Riemens, um die Spannung des Riemens in einer Vielzahl von Betriebszuständen einzustellen. Dieser Spannungseinsteller arbeitet derart, dass die Spannung des Riemens auf einen hohen Riemenspannungswert eingestellt wird, wenn der Motor durch die rotierende elektrische Maschine angelassen wird und auf einen niedrigen Riemenspannungswert eingestellt wird, wenn sich der Motor in einem nachfolgenden Normalbetrieb befindet. Diese Einstellung der Riemenspannung wird von einer Steuereinheit gesteuert, welcher Sensorsignale zugeführt werden.

Aus der WO 03/027537 A1 ist bereits eine Spannvorrichtung für den Riemen eines Zugmitteltriebs bekannt, mittels welcher sowohl im Startbetrieb als auch im generatorischen Betrieb ein schlupffreier Antrieb aller Bauteile bzw. Aggregate, die mit dem Riemen angetrieben werden, sichergestellt werden soll. Zu diesem Zweck ist die Spannvorrichtung in spezieller Weise ausgebildet. Unter anderem kommt ein elektronisches System zum Einsatz, wobei eine Ansteuerung eines Aktors unter Berücksichtigung zumindest eines die Vorspannkraft des Riemens beeinflussenden Parameters erfolgt. Aus der gattungsgemäßen WO 03/036133Az ist eine Vorrichtung zum Einstellen der Riemenspannung eines Riemens bekannt.

### Offenbarung der Erfindung

Ein Verfahren mit den im Anspruch 1 angegebenen Merkmalen weist demgegenüber den Vorteil auf, dass die Effizienz des Riementriebs verbessert ist. Dies wird im Wesentlichen dadurch erreicht, dass die Einstellung der jeweiligen Riemenspannung durch einen Regelvorgang unter Berücksichtigung der momentanen Belastung des Riementriebs und/oder unter Berücksichtigung des Alters des Riemens des Riementriebs vorgenommen wird, wobei auch eine vorausschauende Anpassung der Riemenspannung erfolgen kann.

Nach dem Einstellen der jeweiligen Riemenspannung wird überprüft, ob unerwünschter Riemenschlupf vorliegt. Ist dies der Fall, dann erfolgt eine inkrementelle Erhöhung der Riemenspannung solange, bis kein unerwünschter Schlupf mehr detektiert wird. Unerwünschter Riemenschlupf liegt dann vor, wenn der Riemenschlupf größer ist als ein vorgegebener Grenzwert. Dies liegt beispielsweise dann vor, wenn der Riemen sich um 5% schneller bewegt als die zugehörige Riemenscheibe.

Des Weiteren wird überprüft, ob die momentane Riemenspannung reduziert werden kann oder ggf. auch erhöht werden muss, wobei dann, wenn erkannt wird, dass die Riemenspannung reduziert werden kann, eine Reduzierung der Riemenspannung erfolgt. Diese Überprüfung erfolgt in einer elektronischen Regeleinheit eines Steuergerätes, welche einen Aktuator derart ansteuert, dass dieser eine Einstellung einer jeweils gewünschten Riemenspannung herbeiführt. Bei der Ermittlung dieser Steuersignale berücksichtigt die elektronische Regeleinheit vorzugsweise Sensorsignale und/oder Informationen weiterer Steuergeräte. Insbesondere ermittelt die elektronische Regeleinheit die Steuersignale in Abhängigkeit von momentan zugeschalteten Lasten, einer Prädiktion einer erforderlichen Riemenspannung, von Alterungseffekten des Riemens und unter Auswertung von Drehzahldifferenzsignalen oder unter Zuhilfenahme von abgespeicherten Tabellen oder abgespeicherten Modellen.

Bei der vorliegenden Erfindung erfolgt nicht nur ein einfaches Umschalten zwischen mehreren vorgegebenen Riemenspannungswerten, sondern auch eine stufenlose oder inkrementelle Anpassung der Riemenspannung in Abhängigkeit vom momentanen Zustand des Riementriebs bzw. von der momentanen Belastung des Riemen triebs. Auch Alterungseffekte werden in vorteilhafter Weise kompensiert. Folglich ist der jeweils eingestellte Riemenspannungswert im jeweiligen Betriebszustand nicht fest, sondern abhängig von Parametern, die sich im Laufe des Betriebes des Riementriebs verändern.

In vorteilhafter Weise wird die Riemenspannung eines Riementriebs eines Kraftfahrzeugs derart eingestellt, dass in den verschiedenen Betriebszuständen jeweils unnötige Verluste im Riementrieb sowie unnötige Belastungen des Materials, beispielsweise des Riemens, der Lager, der Aufhängungspunkte, usw., vermieden werden. Gleichzeitig ist aber sichergestellt, dass stets eine hinreichende Leistungsübertragung über den Riemen erfolgen kann. Insbesondere wird im Startfalle eines Verbrennungsmotors durch einen riemengetriebenen Startergenerator sichergestellt, dass eine hohe Riemenspannung eingestellt ist, und dass in allen anderen Betriebsarten durch eine Regelung eine jeweils notwendige niedrige Riemenspannung eingestellt wird.

Weitere vorteilhafte Eigenschaften der Erfindung ergeben sich aus deren beispielhafter Erläuterung anhand der Zeichnung. Es zeigt Figur 1 ein Flussdiagramm zur Erläuterung eines Verfahrens zum Betreiben eines Riementriebs eines Kraftfahrzeugs und die Figuren 2 und 3 Skizzen zur Erläuterung einer Vorrichtung zum Betreiben eines Riementriebs eines Kraftfahrzeugs.

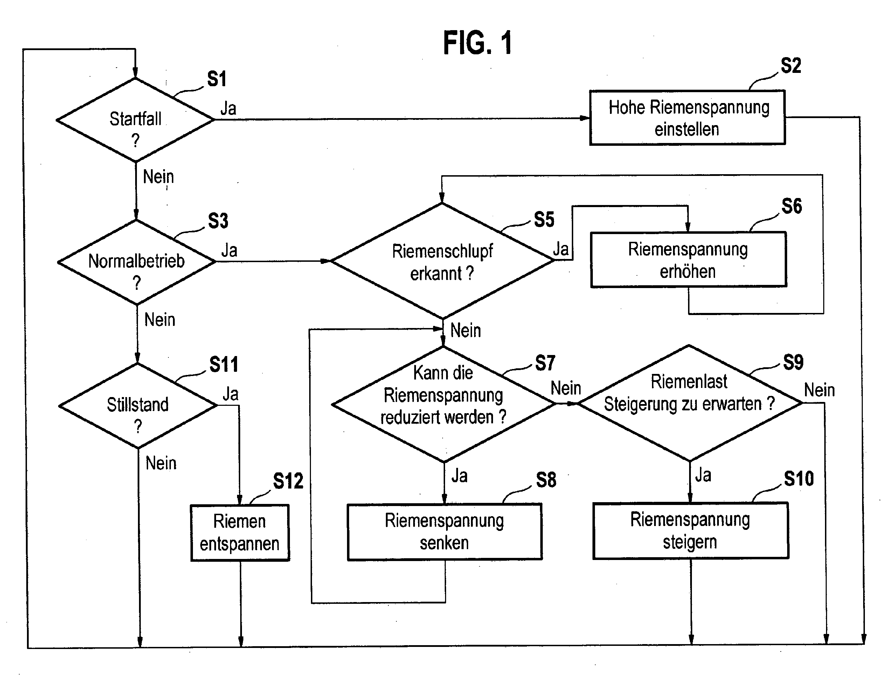

Die Figur 1 zeigt ein Flussdiagramm zur Erläuterung eines Verfahrens zum Betrieben eines Riementriebs eines Kraftfahrzeugs.

Bei diesem Verfahren erfolgt in einem Schritt S1 zunächst eine Abfrage, ob ein Starten des Verbrennungsmotors des Kraftfahrzeugs vorliegt oder zu erwarten ist. Wird im Schritt S1 erkannt, dass ein Starten des Verbrennungsmotors des Kraftfahrzeugs vorliegt oder zu erwarten ist, dann wird in einem Schritt S2 eine hohe Riemenspannung eingestellt.

Wird im Schritt S1 nicht erkannt, dass ein Starten des Verbrennungsmotors des Kraftfahrzeugs vorliegt oder zu erwarten ist, dann erfolgt in einem Schritt S3 eine Abfrage, ob ein Normalbetrieb des Kraftfahrzeugs vorliegt. Unter Normalbetrieb wird dabei beispielsweise der normale Fahrbetrieb des Kraftfahrzeugs verstanden, bei welchem das Kraftfahrzeug bei sich drehender Kurbelwelle bewegt wird und der Startergenerator als Generator wirkt.

Wird im Schritt S3 erkannt, dass Normalbetrieb vorliegt, dann erfolgt in einem Schritt S5 eine Abfrage, ob ein unerwünschter Riemenschlupf vorliegt. Zu diesem Zweck werden beispielsweise die Drehzahl der Riemenscheibe des Startergenerators des Kraftfahrzeugs und die Drehzahl der Riemenscheibe auf der Kurbelwelle des Kraftfahrzeugs gemessen und aus diesen Drehzahlwerten die Drehzahldifferenz ermittelt. Die vorgenannten Drehzahlen sind entweder bereits in anderen Steuergeräten vorhanden und werden von dort aus dem für den Riementrieb vorgesehenen Steuergerät übermittelt oder sie werden unter Verwendung von Drehzahlsensoren gewonnen und an das Steuergerät weitergeleitet.

Wird im Schritt S5 erkannt, dass ein unerwünschter Riemenschlupf vorliegt, dann wird gemäß einem Schritt S6 eine Erhöhung der Riemenspannung durchgeführt. Diese Erhöhung erfolgt vorzugsweise inkrementell, d. h. es erfolgt eine Erhöhung der Riemenspannung um einen kleinen Riemenspannungswert.

Nach dieser Erhöhung der Riemenspannung wird zum Schritt S5 zurückgesprungen, um erneut zu prüfen, ob ein unerwünschter Riemenschlupf vorliegt. Ist dies der Fall, dann wird im Schritt S6 erneut eine Erhöhung der Riemenspannung um einen kleinen Riemenspannungswert vorgenommen, usw.. Dies geschieht solange, bis kein unerwünschter Riemenschlupf vorliegt.

Wird im Schritt S5 erkannt, dass kein unerwünschter Riemenschlupf vorliegt, dann wird zum Schritt S7 übergegangen. Im Schritt S7 erfolgt eine Abfrage, ob die momentan vorliegende Riemenspannung reduziert werden kann. Dies ist beispielsweise dann der Fall, wenn sich die Belastung des Antriebs durch eine Abschaltung von Zusatzaggregaten verringert hat und/oder wenn die Drehzahl der Kurbelwelle des Verbrennungsmotors einen vorgegebenen Drehzahlwert erreicht hat. Bei dieser Überprüfung wird vorzugsweise von Modellen oder Tabellen Gebrauch gemacht, die bei der Fertigung des Kraftfahrzeugs in einem Speicher des Steuergerätes hinterlegt werden und beispielsweise Drehzahlsollwerte für eine Vielzahl von verschiedenen Betriebsarten bzw. Belastungszuständen des Kraftfahrzeugs enthalten.

Wird im Schritt S7 erkannt, dass eine Reduzierung der Riemenspannung möglich ist, dann erfolgt in einem Schritt S8 eine Reduzierung der Riemenspannung. Danach wird zum Schritt S7 zurückgesprungen, um erneut zu überprüfen, ob die Riemenspannung reduziert werden kann. Ist dies der Fall, dann wird erneut im Schritt S8 eine Reduzierung der Riemenspannung durchgeführt, usw.. Dies geschieht solange, bis im Schritt S7 erkannt wird, dass eine Reduzierung der Riemenspannung nicht möglich ist.

Wird im Schritt S7 erkannt, dass eine Reduzierung der Riemenspannung nicht möglich ist, dann wird zum Schritt S9 übergegangen.

Im Schritt S9 erfolgt eine Abfrage, ob eine Erhöhung der Riemenlast zu erwarten ist. Im Rahmen dieser Abfrage erfolgt beispielsweise eine Prädiktion der Riemenspannung aus bekannten Parametern. Bei der Zuschaltung einer Last, beispielsweise eines Klimakompressors, kann die Riemenspannung erhöht werden, bevor ein Riemenschlupf auftritt. Alternativ dazu kann durch eine Vorhersage der Generatorlast auf die zukünftige Riemenlast geschlossen werden. Dies gilt insbesondere bei rekuperierenden Systemen.

Wird im Schritt S9 erkannt, dass eine Erhöhung der Riemenlast zu erwarten ist, dann erfolgt in einem Schritt S10 eine Erhöhung der Riemenspannung. Nach dem Schritt S10 erfolgt ein Rücksprung zum Schritt S1. Wird im Schritt S9 hingegen erkannt, dass eine Steigerung der Riemenlast nicht zu erwarten ist, dann erfolgt ein Rücksprung zum Schritt S1.

Wird im Schritt S3 erkannt, dass kein Normalbetrieb vorliegt, dann erfolgt ein Übergang zu einem Schritt S11. In diesem Schritt S11 wird überprüft, ob sich der Generator im Stillstand befindet.

Wird im Schritt S11 erkannt, dass sich der Generator im Stillstand befindet, dann wird zum Schritt S12 übergegangen. Im Schritt S12 wird eine Entspannung des Riemens vorgenommen.

Nach dem Schritt S12 wird zum Schritt S1 zurückgesprungen. Wird im Schritt S11 erkannt, dass kein Stillstand des Generators vorliegt, dann wird ebenfalls zum Schritt S1 zurückgesprungen.

Das vorstehend beschriebene Verfahren wird vorzugsweise von einer elektronischen Regeleinheit eines Steuergerätes durchgeführt, wobei dieses Steuergerät mit einem Aktuator verbunden ist, welcher zur Einstellung der jeweils notwendigen Riemenspannung vorgesehen ist.

Im Startfall wirkt der Startergenerator des Fahrzeugs als Elektromotor. Das Steuergerät veranlasst den Aktuator dazu, eine hohe Riemenspannung einzustellen bzw. aufzubauen. Der Wert der hohen Riemenspannung ist vorzugsweise veränderbar und wird während des Betriebes des Kraftfahrzeugs in Abhängigkeit von Alterungseffekten und in Abhängigkeit von der jeweils vorliegenden Belastung des Riementriebs verändert bzw. geregelt. Durch die Einstellung einer hohen Riemenspannung im Startfall wird erreicht, dass das auf die Kurbelwelle des Kraftfahrzeugs übertragbare Drehmoment hinreichend groß ist, um die Kurbelwelle anzutreiben.

Im Normalbetrieb wirkt der Startergenerator des Fahrzeugs als Generator. Das Steuergerät veranlasst den Aktuator dazu, eine geringe, nicht jedoch eine zu geringe Riemenspannung einzustellen und dabei eine sichere Funktion des Riementriebs zu gewährleisten. Dabei wird insbesondere darauf geachtet, dass kein unerwünschter Schlupf auftritt und dass die Riemenspannung nicht größer als notwendig ist. Durch die Einstellung einer im Normalbetrieb geringen Riemenspannung wird eine Reduktion der Verluste im Riementrieb erreicht. Dies führt zu einer Reduktion des Kraftstoffverbrauches und der CO₂-Emission des Kraftfahrzeugs. Weiterhin wird eine Erhöhung der Lebensdauer der Lagerung aller Wellen im Riementrieb erreicht. Dazu gehören das Kurbelwellenhauptlager, die Lager des Generators, der Wasserpumpe, des Klimakompressors und der Lenkhilfepumpe. Ferner wird die Lebensdauer des Riemens erhöht und auch eine Kostenreduktion erreicht, da die Lagerungen und der Riemen kostengünstiger ausgelegt werden können.

Bei der vorliegenden Erfindung erfolgt eine stufenlose oder inkrementelle Anpassung der Riemenspannung. Eine einfache Umschaltung zwischen festen Riemenspannungen ist nicht ausreichend, da die Belastung des Riementriebs in Abhängigkeit von der Drehzahl und der Belastung durch momentan angeschlossene Aggregate variiert. Bei konstanter elektrischer Generatorlast fällt das aufgenommene Drehmoment des Generators über der Drehzahl ab.

Zur Überprüfung, ob unerwünschter Schlupf vorliegt, wird - wie bereits oben ausgeführt wurde - eine Drehzahldifferenz zwischen der Drehzahl der Riemenscheibe des Startergenerators und der Riemenscheibe auf der Kurbelwelle ermittelt.

Zur Überprüfung, ob der Riemen zu fest gespannt ist, kann ebenfalls die genannte Drehzahldifferenz ausgewertet werden. Dies kann bei einer kurzzeitigen Entspannung des Riemens bis zur Schlupfgrenze oder bei einer Steigerung der Belastung, z. B. über eine verstärkte Belastung des Generators vorgenommen werden. Alternativ oder zusätzlich dazu kann eine zu hohe Spannung des Riemens unter Berücksichtigung eines in einem Speicher des Steuergerätes hinterlegten Modells oder einer abgespeicherten Tabelle ermittelt werden. Die erforderliche Riemenspannung kann dabei unter Berücksichtigung der Drehzahl und/oder der Belastung angeschlossener Aggregate ermittelt werden.

Eine Vorhersage der erforderlichen Riemenspannung kann durch eine Prädiktion aus bekannten Parametern erfolgen. Beispielsweise kann bei einer Zuschaltung einer Last eine Erhöhung der Riemenspannung vorgenommen werden, bevor ein unerwünschter Riemenschlupf auftritt. Eine weitere Möglichkeit besteht darin, eine erforderliche Riemenspannung als Funktion der momentan zugeschalteten Lasten unter Verwendung einer abgespeicherten Tabelle oder eines abgespeicherten Modells vorherzusagen. Die erforderliche Riemenspannung kann auch unter Verwendung einer Tabelle vorhergesagt werden, in welcher die Alterung des Riemens berücksichtigende Daten abgespeichert sind. Beim Vorliegen einer Startanforderung kann die Riemenspannung bereits zu einem Zeitpunkt erhöht werden, der vor dem eigentlichen Startvorgang liegt.

Im Falle eines Stillstands des Riementriebs kann eine geringe Riemenspannung eingestellt werden, um die Lagerungen der Vorrichtung und den Riemen selbst zu schützen. Vorzugsweise erfolgt die Einstellung dieser geringen Riemenspannung erst dann, wenn ein zeitnaher Wiederstart ausgeschlossen werden kann, da sich andernfalls die Zeit bis zum Aüfbau der erforderlichen hohen Riemenspannung verzögert.

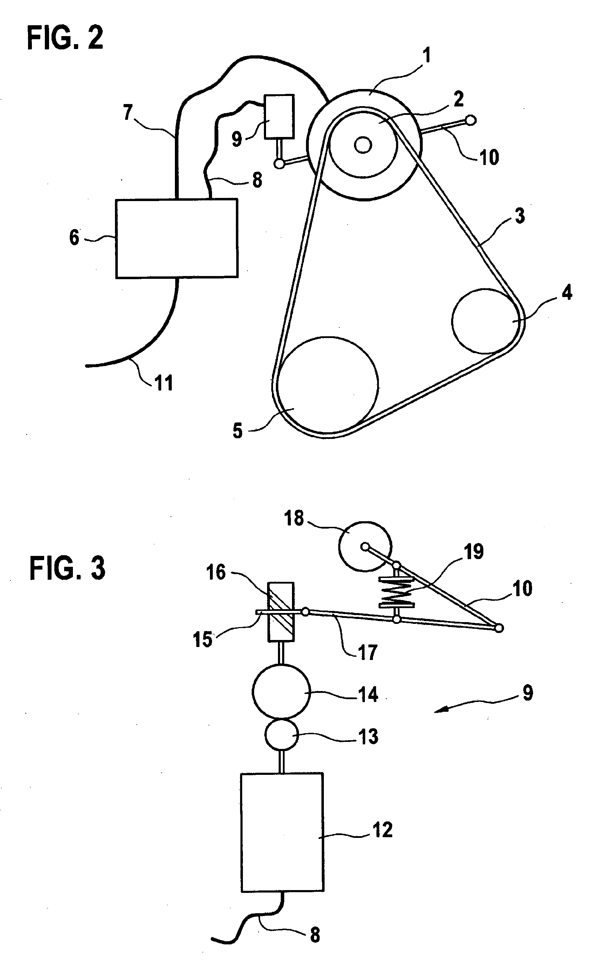

Die Figuren 2 und 3 zeigen Skizzen zur Erläuterung einer Vorrichtung zum Betrieben eines Riementriebs eines Kraftfahrzeugs.

Die in der Figur 2 dargestellte Vorrichtung weist einen riemengetriebenen Startergenerator 1, eine mit diesem verbundene Riemenscheibe 2, einen Antriebsriemen 3, eine Umlenk- und Spannrolle 4, eine auf der Kurbelwelle des Kraftfahrzeugs angeordnete Riemenscheibe 5, ein Steuergerät 6, eine Leitung 7, eine weitere Leitung 8, einen Aktuator 9, einen Hebel 10 zum Verstellen des Generators 1 und eine Kommunikationsleitung 11 auf.

Der Antriebsriemen 3 führt eine Leistungsübertragung zwischen der Riemenscheibe 5 der Kurbelwelle und der Riemenscheibe 2 des Startergenerators 1 durch. Dabei können weitere Spannrollen oder Riemenscheiben zur Anwendung kommen. Bei einem Startvorgang des Verbrennungsmotors wirkt der Startergenerator 1 als Elektromotor und überträgt seine abgegebene Leistung über den Riemen 3 zur Kurbelwelle 5. Wegen der dabei wirkenden hohen Drehmomente wird eine hohe Riemenspannung eingestellt. Im Normalbetrieb des Verbrennungsmotors wirkt der Startergenerator als Generator und wird durch den Riemen 3 angetrieben. Dabei ist das übertragene Drehmoment geringer. Deshalb wird im Normalbetrieb eine reduzierte Riemenspannung eingestellt. Die jeweils erforderliche Riemenspannung ist abhängig von verschiedenen Parametern. Dabei ist insbesondere das zu übertragende Drehmoment von Bedeutung. Dieses wiederum ist abhängig von der Belastung des Riementriebs durch momentan angeschlossene Aggregate und von der Drehzahl.

Eine im Steuergerät 6 vorgesehene elektronische Regeleinheit ist dazu vorgesehen, eine jeweils optimale Riemenspannung zu ermitteln und deren Einstellung in die Wege zu leiten. Bei der Ermittlung der jeweils optimalen Riemenspannung berücksichtigt die Regeleinheit die Drehzahl des Startergenerators, die Drehzahl der Kurbelwelle bzw. des Verbrennungsmotors, den Betriebszustand der angeschlossenen Aggregate, die Auslastung des Generators, den Modus des Startergenerators und die momentane Temperatur.

Das Steuergerät 6 kommuniziert über die Kommunikationsleitung 11 mit anderen Signal- und Datenquellen sowie Signalempfängern. Letztere sind insbesondere Steuergeräte und Sensoren.

Zur Beeinflussung der Riemenspannung sendet das Steuergerät 6 elektrische Signale über die Leitung 8 an den Aktuator 9. Dieser lenkt eine oder mehrere der vorhandenen Riemenscheiben und/oder Spannrollen derart aus, dass die jeweils gewünschte Riemenspannung eingestellt wird. Die Energie zur Betätigung des Aktuators 9 kann beispielsweise elektrisch, hydraulisch oder pneumatisch bereitgestellt werden. Eine Unterstützung des Aktuators 9 durch Speicherelemente (Federn) oder durch eine Selbstverstärkung kann in vorteilhafter Weise vorgenommen werden.

Ein Ausführungsbeispiel für den Aktuator 9 ist in der Figur 3 gezeigt. Bei diesem Ausführungsbeispiel wird das vom Steuergerät bereitgestellte Steuersignal über die Leitung 8 an einen elektrischen Motor 12 geleitet. Bei diesem handelt es sich um eine permanenterregte Gleichstrommaschine oder um einen elektronisch kommutierten Motor. Dieser ist mit Zahnrädern 13 und 14 verbunden, die eine erste Getriebestufe bilden. Mittels einer Schnecke 16 und eines Gegenstückes 15 wird die rotatorische Bewegung des Motors in eine translatorische Bewegung eines Hebels 17 umgesetzt. Dabei ist gewährleistet, dass durch Selbsthemmung ein Abdriften der Riemenspannung verhindert wird. Mittels des Hebels 17, eines Hebels 10 und einer Feder 19 wird die vom Motor bereitgestellte Kraft auf eine Spannrolle 18 übertragen, die die Riemenspannung in jeweils gewünschter Weise einstellt.

Vorstehend wurden Ausführungsbeispiele erläutert, bei denen ein Startergenerator verwendet wird. Alternativ dazu kann die Erfindung auch beim Vorliegen eines reinen Generatorsystems zur Regelung der Riemenspannung verwendet werden. Bei dieser Alternative fallen die in der Figur 1 gezeigten Schritte S1 und S2 weg.

## Patentansprüche

1. Verfahren zum Betreiben eines Riementriebs eines Kraftfahrzeugs, bei welchem bei einer hohen Belastung eine hohe Riemenspannung und im Normalbetrieb eine niedrige Riemenspannung eingestellt wird, wobei
- die Einstellung der jeweiligen Riemenspannung durch einen Regelvorgang unter Berücksichtigung der momentanen Belastung des Riementriebs und/oder unter Berücksichtigung des Alters des Riemens des Riementriebs vorgenommen wird, und **dadurch gekennzeichnet, dass**
- nach dem Einstellen der jeweiligen Riemenspannung überprüft wird, ob unerwünschter Riemenschlupf vorliegt (S5),
- beim Erkennen des Vorliegens von unerwünschtem Riemenschlupf die Riemenspannung solange inkremental erhöht wird, bis ein Nichtvorliegen von unerwünschtem Riemenschlupf detektiert wird (S6), und
- beim Erkennen des Nichtvorliegens von unerwünschtem Riemenschlupf überprüft wird, ob die Riemenspannung reduziert werden kann (S7)
- wenn erkannt wird, dass die Riemenspannung reduziert werden kann, erfolgt eine Reduzierung der Riemenspannung (S8).

2. Verfahren nach Anspruch 1, **dadurch gekennzeichnet, dass** beim Nichtvorliegen eines Startvorganges und dem Nichtvorliegen des Normalbetriebes überprüft wird, ob ein Stillstand des Generators des Kraftfahrzeugs vorliegt.

3. Verfahren nach Anspruch 2, **dadurch gekennzeichnet, dass** beim Erkennen eines Stillstandes des Generators eine Reduktion der Riemenspannung herbeigeführt wird.

4. Verfahren nach einem der vorhergehenden Ansprüche, **dadurch gekennzeichnet, dass** bei Erkennung, dass die Riemenspannung reduziert werden kann, die Riemenspannung reduziert wird.

5. Verfahren nach Anspruch 4, **dadurch gekennzeichnet, dass** bei Nichterkennung, dass die Riemenspannung reduziert werden kann, überprüft wird, ob eine Erhöhung der Riemenlast zu erwarten ist.

6. Verfahren nach Anspruch 5, **dadurch gekennzeichnet, dass** bei Erkennung, dass eine Erhöhung der Riemenlast zu erwarten ist, die Riemenspannung erhöht wird.

7. Verfahren nach einem der vorhergehenden Ansprüche, **dadurch gekennzeichnet, dass** der Regelvorgang von einer elektronischen Regeleinheit eines Steuergerätes des Kraftfahrzeugs durchgeführt wird.

8. Verfahren nach Anspruch 7, **dadurch gekennzeichnet, dass** die elektronische Regeleinheit zur Veränderung des Riemenspannungswertes einem Aktuator Steuersignale zuführt.

9. Verfahren nach Anspruch 7 oder 8, **dadurch gekennzeichnet, dass** die elektronische Regeleinheit die Steuersignale unter Berücksichtigung von Sensorsignalen und/oder Informationen weiterer Steuergeräte ermittelt.

10. Verfahren nach einem der Ansprüche 7 - 9, **dadurch gekennzeichnet, dass** die elektronische Regeleinheit bei der Überprüfung, ob unerwünschter Schlupf vorliegt, ein Drehzahldifferenzsignal ermittelt.

11. Verfahren nach einem der Ansprüche 7 - 10, **dadurch gekennzeichnet, dass** die elektronische Regeleinheit bei der Überprüfung, ob die Riemenspannung reduziert werden kann, ein Drehzahldifferenzsignal ermittelt oder Daten aus einem abgespeicherten Modell oder einer abgespeicherten Tabelle verwendet.

12. Verfahren nach einem der Ansprüche 8 -11, **dadurch gekennzeichnet, dass** die elektronische Regeleinheit bei der Ermittlung der Steuersignale eine Prädiktion der erforderlichen Riemenspannung vornimmt.

13. Vorrichtung zum Betreiben eines Riementriebs eines Kraftfahrzeugs, welche einen Generator (1), eine mit dem Generator verbundene Riemenscheibe (2), eine Kurbelwelle, eine mit der Kurbelwelle verbundene Riemenscheibe (5), ein mit dem Generator (1) über eine erste Leitung (7) verbundenes Steuergerät (6), einen Antriebsriemen (3), welcher um die Riemenscheibe (2) des Generators (1) und die Riemenscheibe (5) auf der Kurbelwelle gelegt ist, und einen mit dem Steuergerät (6) verbundenen Aktuator (9) zur Einstellung eines Riemenspannungswertes aufweist, **dadurch gekennzeichnet, dass** das Steuergerät (6) eine elektronische Regeleinheit aufweist, die zur Durchführung eines Verfahrens nach einem der vorhergehenden Ansprüche ausgebildet ist.

14. Vorrichtung nach Anspruch 13, **dadurch gekennzeichnet, dass** der Generator ein Startergenerator ist

## Claims

1. Method for operating a belt drive of a motor vehicle, in which method a high belt tension is set at a high loading, and a low belt tension is set during normal operation, wherein
- the respective belt tension is set by a regulating process taking into account the current loading of the belt drive and/or taking into account the age of the belt of the belt drive, and **characterized in that**
- after the respective belt tension is set, a check is made to determine whether undesired belt slip is present (S5),
- when the presence of undesired belt slip is identified, the belt tension is incrementally increased until the absence of undesired belt slip is detected (S6), and
- when the absence of undesired belt slip is identified, a check is made to determine whether the belt tension can be reduced (S7),
- when it is identified that the belt tension can be reduced, the belt tension is reduced (S8).

2. Method according to Claim 1, **characterized in that**, in the absence of a starting process and in the absence of normal operation, a check is made to determine whether the generator of the motor vehicle is stationary.

3. Method according to Claim 2, **characterized in that**, when it is identified that the generator is stationary, the belt tension is reduced.

4. Method according to one of the preceding claims, **characterized in that**, when it is identified that the belt tension can be reduced, the belt tension is reduced.

5. Method according to Claim 4, **characterized in that**, when it is not identified that the belt tension can be reduced, a check is made to determine whether an increase in the belt load can be expected.

6. Method according to Claim 5, **characterized in that**, when it is identified that an increase in the belt load can be expected, the belt tension is increased.

7. Method according to one of the preceding claims, **characterized in that** the regulating process is carried out by an electronic regulating unit of a controller of the motor vehicle.

8. Method according to Claim 7, **characterized in that** the electronic regulating unit supplies control signals to an actuator in order to change the belt tension value.

9. Method according to Claim 7 or 8, **characterized in that** the electronic regulating unit determines the control signals taking into account sensor signals and/or information from further controllers.

10. Method according to one of Claims 7-9, **characterized in that** the electronic regulating unit, when checking whether undesired slip is present, determines a rotation speed difference signal.

11. Method according to one of Claims 7-10, **characterized in that** the electronic regulating unit, when checking whether the belt tension can be reduced, determines a rotation speed difference signal or uses data from a stored model or a stored table.

12. Method according to one of Claims 8-11, **characterized in that** the electronic regulating unit, when determining the control signals, predicts the required belt tension.

13. Apparatus for operating a belt drive of a motor vehicle, which apparatus has a generator (1), a belt pulley (2) which is connected to the generator, a crankshaft, a belt pulley (5) which is connected to the crankshaft, a controller (6) which is connected to the generator (1) by means of a first line (7), a drive belt (3) which is placed around the belt pulley (2) of the generator (1) and the belt pulley (5) on the crankshaft, and an actuator (9), which is connected to the controller (6), for setting a belt tension value, **characterized in that** the controller (6) has an electronic regulating unit which is designed to carry out a method according to one of the preceding claims.

14. Apparatus according to Claim 13, **characterized in that** the generator is a starter generator.

## Revendications

1. Procédé pour faire fonctionner une transmission par courroie d'un véhicule automobile, selon lequel une tension de courroie élevée est réglée en présence d'une charge élevée et une tension de courroie plus faible est réglée en fonctionnement normal,
- le réglage de la tension de courroie correspondante est réalisé par une opération de régulation en tenant compte de la charge momentanée de la transmission par courroie et/ou en tenant compte de l'âge de la courroie, et **caractérisé en ce que**
- après le réglage de la tension de courroie correspondante, un contrôle est effectué pour vérifier s'il existe un patinage indésirable de la courroie (S5),
- en cas de détection de la présence d'un patinage indésirable de la courroie, la tension de la courroie est augmentée de manière incrémentale jusqu'à ce qu'une absence de patinage indésirable de la courroie soit détectée (S6), et
- en cas de détection de l'absence d'un patinage indésirable de la courroie, un contrôle est effectué pour vérifier si la tension de la courroie peut être réduite (S7),
- s'il est constaté que la tension de la courroie peut être réduite, une réduction de la tension de la courroie a lieu (S8).

2. Procédé selon la revendication 1, **caractérisé en ce qu'**en l'absence d'une opération de démarrage et en l'absence du fonctionnement normal, un contrôle est effectué pour vérifier s'il y a présence d'une immobilisation d'un alternateur du véhicule automobile.

3. Procédé selon la revendication 2, **caractérisé en ce qu'**en cas de détection d'une immobilisation de l'alternateur, une réduction de la tension de courroie est effectuée.

4. Procédé selon l'une des revendications précédentes, **caractérisé en ce qu'**en cas de détection du fait que la tension de courroie peut être réduite, la tension de courroie est réduite.

5. Procédé selon la revendication 4, **caractérisé en ce qu'**en cas de non-détection du fait que la tension de courroie peut être réduite, un contrôle est effectué pour vérifier si une augmentation de la charge de courroie est à attendre.

6. Procédé selon la revendication 5, **caractérisé en ce qu'**en cas de détection du fait qu'une augmentation de la charge de courroie est à attendre, la tension de courroie est augmentée.

7. Procédé selon l'une des revendications précédentes, **caractérisé en ce que** l'opération de régulation est effectuée par une unité de régulation électronique d'un contrôleur du véhicule automobile.

8. Procédé selon la revendication 7, **caractérisé en ce que** l'unité de régulation électronique achemine des signaux de commande à un actionneur en vue de modifier la valeur de la tension de courroie.

9. Procédé selon la revendication 7 ou 8, **caractérisé en ce que** l'unité de régulation électronique détermine les signaux de commande en tenant compte de signaux de capteur et/ou d'informations de contrôleurs supplémentaires.

10. Procédé selon l'une des revendications 7 à 9, **caractérisé en ce que** l'unité de régulation électronique, lors du contrôle de la présence éventuelle d'un patinage indésirable, détermine un signal de différence de vitesse de rotation.

11. Procédé selon l'une des revendications 7 à 10, **caractérisé en ce que** l'unité de régulation électronique, lors du contrôle du fait que la tension de courroie peut ou non être réduite, détermine un signal de différence de vitesse de rotation ou utilise des données provenant d'un modèle mis en mémoire ou d'une table mise en mémoire.

12. Procédé selon l'une des revendications 8 à 11, **caractérisé en ce que** l'unité de régulation électronique, lors de la détermination des signaux de commande, effectue une prévision de la tension de courroie nécessaire.

13. Dispositif pour faire fonctionner une transmission par courroie d'un véhicule automobile, lequel possède un alternateur (1), une poulie de courroie (2) reliée à l'alternateur, un vilebrequin, une poulie de courroie (5) reliée au vilebrequin, un contrôleur (6) relié à l'alternateur (1) par le biais d'une première ligne (7), une courroie d'entraînement (3) qui est posée autour de la poulie de courroie (2) de l'alternateur (1) et de la poulie de courroie (5) sur le vilebrequin, et un actionneur (9) relié au contrôleur (6) pour régler une valeur de tension de courroie, **caractérisé en ce que** le contrôleur (6) possède une unité de régulation électronique qui est configurée pour mettre en oeuvre un procédé selon l'une des revendications précédentes.

14. Dispositif selon la revendication 13, **caractérisé en ce que** l'alternateur est un alternateur-démarreur.
